# EUROPÄISCHE PATENTSCHRIFT

(11) **EP 4 328 824 B1**
(45) Veröffentlichungstag und Bekanntmachung des Hinweises auf die Patenterteilung: **25.06.2025**
(21) Anmeldenummer: 22192265.1
(22) Anmeldetag: 26.08.2022
(51) Int. Cl.: G06Q 10/08

(54) **RFID-SYSTEM**
RFID SYSTEM
SYSTÈME RFID

(43) Veröffentlichungstag der Anmeldung: 28.02.2024
(73) Patentinhaber: Leuze electronic GmbH + Co. KG, 73277 Owen/Teck (DE)
(72) Erfinder: Pütz-Gerbig, Oliver, 73760 Ostfildern (DE)
(74) Vertreter: Ruckh, Rainer Gerhard

(56) Entgegenhaltungen:
- EP-A1- 1 840 805
- US-A1- 2003 097 302
- US-A1- 2007 176 750

## Beschreibung

Die Erfindung betrifft ein RFID-System.

Derartige RFID-Systeme weisen generell eine Anzahl von RFID-Schreib-/Leseeinheiten sowie RFID-Datenträgern auf. Mit einer RFID-Schreib-/Leseeinheit können generell Daten aus einem Speicher eines RFID-Datenträgers ausgelesen werden und auch in diesen eingeschrieben werden.

Derartige RFID-Systeme werden insbesondere zur Objektidentifikation eingesetzt, beispielsweise in Logistiksystemen. Einzelne Objekte sind jeweils mit einem RFID-Datenträger gekennzeichnet. Die RFID-Datenträger, die als RFID-Tags bzw. Transponder ausgebildet sind, stellen robuste Einheiten dar, die aufgrund ihrer geringen Größe in oder an Objekten angebracht werden können. Durch Lesen der Speicherinhalte der RFID-Datenträger mittels der RFID-Schreib-/Leseeinheit ist eine Objektidentifikation und auch eine Objektverfolgung möglich.

Die RFID-Datenträger sind meist passive Datenträger, deren elektronischer Speicher (EEPROM oder FRAM) häufig auf die sog. UID (Unique ID) oder den UII (Unique Item Identifier) bzw. EPC (Electronic Product Code) und TID (Tag ID) beschränkt ist.

Dieser Speichertyp ist typischerweise sehr klein (64 - 496 bit) und je nach RFID-Technologie (Frequenzbereich LF, HF oder UHF) bei der Chip-Herstellung fest einprogrammiert und unveränderlich (read-only), oder frei beschreibbar und veränderbar.

Zusätzlicher frei programmierbarer Speicher (User Memory) ist bei einigen kommerziell erhältlichen RFID-Tag-ICs verfügbar, jedoch ebenfalls meist auf wenige 100 Bit beschränkt. Gründe dafür sind die signifikant höheren IC-Kosten bei größeren Speichern und die langen Datenübertragungszeiten beim Auslesen oder Programmieren dieser Speicher.

In der Praxis werden deshalb bei RFID-Systemen mit einer Vielzahl von zu identifizierenden Objekten und bei Track&Trace-Applikationen mit häufigen Lese- /Schreibvorgängen und schnellen dynamischen Prozessen ausschließlich RFID-Tags mit kleinem Speicher für die UID, UII bzw. EPC eingesetzt. Auf zusätzlichen Speicher (User Memory) wird meist verzichtet.

Bei Projekten mit einer Vielzahl von zu identifizierenden Objekten verursacht die Ausstattung mit RFID-Tags - insbesondere bei einmalig verwendeten RFID-Tags für bleibende Kennzeichnung von Produkten - permanent laufende Kosten und stellt einen erheblichen Kostenfaktor dar, der vom Anwender unerwünscht ist und minimiert werden soll.

Meist wird deshalb die Größe des RFID-Speichers auf ein Minimum beschränkt, um die Kosten niedrig zu halten.

Darüber hinaus ist das Auslesen oder Programmieren eines größeren Speicherinhalts mit einem beträchtlichen Zeitaufwand verbunden, der angesichts der vergleichsweise geringen Datenübertragungsraten der standardisierten Luftschnittstelle zwischen RFID-Tag und RFID-Lesegerät zu prozesstechnischen Problemen bei der Erfassung vieler RFID-Tags (Pulk-Erfassung) insbesondere bei dynamischen Prozessen führen kann.

Erschwerend kommt hinzu, dass der Zugriff auf den frei programmierbaren Speicherbereich (sog. User memory) nur nach erfolgtem erfolgreichen Erfassen der UID bzw. UII / EPC möglich ist (sog. Inventory-Prozess). Somit ist die Abfrage oder Programmierung zusätzlicher Daten im User Memory auf Grund des speziellen Zeitverhaltens eines RFID-Lese-/Schreib-Vorgangs bei schnellen, dynamischen Prozessen oft nicht realisierbar.

In solchen Fällen kann ein wesentlicher Vorteil eines RFID-Systems gegenüber Barcode-Systemen, nämlich Daten flexibel auslesen, verändern oder ergänzen zu können, nicht ausgespielt werden.

Die US 2007/0176750 A1 betrifft ein Datenmanagement für RFID-Systeme. Jedes RFID-System weist eine Schreib-/ Leseeinheit auf, die Tag-Informationen aus einem RFID-Tag auslesen oder in diesen einschreiben kann. Das Datenmanagement erfolgt in einer Rechnereinheit, die eine Speichereinheit aufweist. Für jeden RFID-Tag ist eine in diesem gespeicherte Tag-Information auch in einem physikalischen Speicherbereich der Speichereinheit gespeichert. Darüber hinaus sind weitere Tag-Informationen in virtuellen Speicherbereichen abgelegt. Diese Tag-Informationen sind editierbar. Mit einer Prozessoreinheit können die editierten Informationen an die jeweiligen Schreib-/Leseeinheiten weitergegeben werden um mit diesem Tag-Informationen in den RFID-Tags zu aktualisieren.

Die US 2003/00997302 A1 betrifft ein Monitoring-System mit RFID-Tags, die Marketing-Material kennzeichnen. In den RFID-Tags enthaltene Informationen werden von einer Leseeinheit ausgelesen und von dort einer Rechnereinheit zugeführt.

Die EP 1 840 805 A1 betrifft ein Management-System für Werbeinformationen. Zur Identifikation von Werbeinformationen sind RFID-Tags vorhanden. Dort gespeicherte Informationen können mit einer Leseeinheit ausgelesen werden. Die Leseeinheit sendet die Informationen an eine von einer Rechnereinheit gebildete Management-Einheit, wo die Informationen angezeigt werden können.

Der Erfindung liegt die Aufgabe zugrunde, ein RFID-System mit hoher Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein RFID-System mit wenigstens einer RFID-Schreib-/Leseeinheit und wenigstens einem RFID-Datenträger. Die wenigstens eine RFID-Schreib-/Leseeinheit ist derart ausgebildet, Daten aus einem Speicher des wenigstens einen RFID-Datenträgers auszulesen oder in diesen einzuschreiben. Die wenigstens eine RFID-Schreib-/Leseeinheit ist über einen Datenkanal mit einer Datenbank einer Rechnereinheit verbunden. Der Datenkanal, die Datenbank und die Rechnereinheit sind Bestandteile des RFID-Systems. In der Datenbank ist wenigstens ein virtueller Speicher vorhanden, welcher ein virtuelles Abbild des Inhalts des Speichers des wenigstens einen RFID-Datenträgers enthält. Der Speicherbereich des oder jedes virtuellen Speichers ist dynamisch veränderbar.

Die Funktionalität des erfindungsgemäßen RFID-Systems ist durch die Rechnereinheit mit ihrer Datenbank, in welcher in virtuellen Speichern virtuelle Abbilder der Inhalte der Speicher der einzelnen RFID-Datenträger gespeichert sind, erweitert.

Damit kann das Schreiben und Lesen von Daten vom RFID-Datenträger in die Rechnereinheit und damit in eine Ebene oberhalb der physikalischen Ebene der RFID-Schreib-/Leseeinheit verlagert werden.

Die rechnerbasierten Lese- und Schreibvorgänge können schneller als Schreib-/Lesevorgänge mit RFID-Schreib-/Leseeinheiten durchgeführt werden, bei welchen ein Zugriff auf die Daten der Speicher von RFID-Datenträger erst nach Erfassen der UID bzw. UII/EPC möglich ist.

Zudem ist der Zugriff auf Daten in den virtuellen Speichern der Datenbank jederzeit möglich, was die Flexibilität des RFID-Systems erhöht.

Ein weiterer wesentlicher Vorteil der Erfindung besteht darin, dass in der Datenbank virtuelle Speicher für eine Vielzahl von RFID-Datenträger vorhanden sein können. Die dort gespeicherten Daten sind in der Datenbank administrierbar, archivierbar, auswertbar und replizierbar.

Das erfindungsgemäße RFID-System ist derart skalierbar, dass es eine große Anzahl von RFID-Schreib-/Leseeinheiten und auch RFID-Datenträger aufweisen kann. Mit dem erfindungsgemäßen RFID-System können damit insbesondere komplexe Identifikationssysteme realisiert werden.

Ein wesentlicher Aspekt der Erfindung besteht darin, dass in einem virtuellen Speicher das virtuelle Abbild des Speicherinhalts des RFID-Datenträgers vorhanden ist, d.h. die im RFID-Datenträger physikalisch gespeicherten Daten sind vollständig im zugeordneten virtuellen Speicher vorhanden.

Ein wesentlicher Vorteil entsteht dadurch, dass im Falle eines Ausfalls oder Defekts eines RFID-Datenträgers, wodurch die physikalisch gespeicherten Daten nicht mehr gelesen werden können, ein Backup des Dateninhalts über den zugeordneten virtuellen Speicher zur Verfügung steht, und somit keine Objekt- und Prozessdaten verloren gehen.

Ein weiterer wesentlicher vorteilhafter Aspekt der Erfindung besteht darin, dass der virtuelle Speicher für den oder einen RFID-Datenträger einen erweiterten Speicherbereich aufweist, in welchem erweiterte Daten abgespeichert sind, die im Speicher des RFID-Datenträgers nicht vorhanden sind.

Damit werden für die einzelnen RFID-Datenträger in deren virtuellen Speichern zusätzliche Daten gespeichert, nicht aber in den Speichern der RFID-Datenträger selbst. Dies bedeutet, dass über die virtuellen Speicher die Speicherkapazitäten der RFID-Datenträger virtuell erweitert werden, ohne dass für diese RFID-Datenträger kostenintensive größere Speicher vorgesehen werden müssen.

Beispielsweise sind die erweiterten Daten von Sensormessungen, Informationen über einen Gerätestatus, Prozessinformationen und/oder Metadaten gebildet.

Damit können umfangreiche Prozessdaten von Identifikationssystemen in dem virtuellen Speicher hinterlegt werden, wobei diese jederzeit aktualisiert und geändert werden können.

Besonders vorteilhaft ist der Speicherbereich des oder jedes virtuellen Speichers dynamisch veränderbar.

Dies bedeutet, dass über die Rechnereinheit und die Datenbank flexibel und schnell die Größe der virtuellen Speicher an den Umfang der zu speichernden Daten angepasst werden kann, was bei den begrenzten physikalischen Speichern der RFID-Datenträger prinzipiell nicht möglich ist.

Vorteilhaft ist die Datenbank segmentierbar und/oder skalierbar.

Die Datenbank kann somit flexibel an unterschiedliche Anforderungen angepasst werden.

Besonders vorteilhaft ist die Datenbank zugriffsgeschützt.

Damit sind die in der Datenbank gespeicherten Inhalte gegen unbefugte Zugriffe geschützt.

Zweckmäßig ist die Datenbank durch einen Lock-Mechanismus oder durch Passwort-Eingaben zugriffsgeschützt.

Gemäß einer vorteilhaften Ausgestaltung können für die Datenbank unterschiedliche Zugriffsrechte vergeben werden.

Damit können verschiedenen Benutzern unterschiedliche Berechtigungen zugewiesen werden, beispielsweise derart, dass diese unterschiedliche Befugnisse zur Änderung von Daten in den virtuellen Speichern haben.

Vorteilhaft weist hierzu die oder jede Rechnereinheit eine Benutzerschnittstelle auf, über welche nach Benutzerauthentifizierung ein Zugriff auf die Datenbank und deren virtuellen Speicher ermöglicht ist.

Je nach Zugriffsberechtigung ist dann für einen Benutzer festgelegt, ob und in welchem Umfang er Daten in den virtuellen Speichern ändern oder bearbeiten, insbesondere auswerten darf.

Für den Fall, dass die Komponenten des RFID-Systems in ein Netzwerk mit einer Cloud eingebunden sind, ist vorteilhaft die Benutzerschnittstelle in einem Cloud-System vorgesehen.

Die Rechnereinheit sowie die oder alle RFID-Schreib-/Leseeinheiten sind vorteilhaft in ein Netzwerk eingebunden. Dann sind nicht nur die Rechnereinheiten und die RFID-Schreib-/Leseeinheiten über Datenkanäle verbunden, sondern auch die weiteren Komponenten des Netzwerks.

Gemäß einer vorteilhaften Ausgestaltung sind leitungsgebundene Datenkanäle als Bestandteil eines Ethernet-basierten Netzwerks vorgesehen.

Mit dem Ethernet-basierten Netzwerk wird eine schnelle Datenübertragung ermöglicht, was insbesondere schnelle Schreib- und Lesevorgänge für die den RFID-Datenträgern zugeordneten virtuellen Speicher ermöglicht. Damit können auch größere Datenmengen in dynamischen Prozessen verarbeitet werden.

Besonders vorteilhaft sind die Datenkanäle in der Kommunikation zu Maschinen- und Anlagensteuerungen Bestandteil eines echtzeitfähigen Feldbus-Systems.

Beispiele für echtzeitfähige Ethernet-basierte Feldbus-Systeme sind PROFI-NET, Ethernet IP und EtherCAT.

Gemäß einer alternativen Ausgestaltung sind berührungslos arbeitende Datenkanäle vorgesehen, über welche eine funkbasierte Datenübertragung erfolgt.

Die funkbasierte Datenübertragung kann z.B. mittels WLAN oder Bluetooth realisiert werden. Auch mit dieser Ausführungsform kann eine schnelle Datenübertragung realisiert werden.

Gemäß einer vorteilhaften Ausführungsform erfolgt über die Datenkanäle eine Datenkommunikation mit internetfähigen standardisierten Kommunikationsprotokollen.

Damit lassen sich verteilte Netzwerke, insbesondere auch mit RFID-Schreib-/Leseeinheiten oder Rechnereinheiten an verschiedenen Standorten realisieren, wobei insbesondere Komponenten des Netzwerks Bestandteil einer Cloud sein können.

In diesem Fall erfolgt die Kommunikation über die Datenkanäle über internetfähige Kommunikationsprotokolle, wie z.B. Ethernet TCP/IP.

Gemäß einer vorteilhaften Weiterbildung bilden die Datenkanäle sichere Kommunikations-Schnittstellen mit verschlüsselter Datenübertragung aus.

Damit erfolgt über die Datenkanäle eine fehlersichere Datenübertragung, was beispielsweise durch Absicherung der übertragenen Daten mit Prüfsummen wie CRC-Prüfsummen oder über den Austausch von Zertifikaten erfolgen kann.

Zweckmäßig bildet die Rechnereinheit eine netzwerkfähige Einheit.

Beispielsweise ist die Rechnereinheit ein Server, ein Edge-Computer, eine Cloud-Anwendung oder ein lokaler Industrie-PC einer Automatisierungsanlage.

Insbesondere bei verteilten Netzwerken sind vorteilhaft mehrere Rechnereinheiten mit Datenbanken vorhanden, wobei die Rechnereinheiten über Netzwerk-Router oder eine Cloud verbunden sind.

Die Rechnereinheiten sind dabei funktional gekoppelt. Hierzu sind vorteilhaft Mittel zur Synchronisierung der Datenbanken und/oder der in den Datenbanken vorhandenen virtuellen Speichern vorhanden.

Die Mittel zur Synchronisierung sind vorteilhaft Softwaremodule in den Rechnereinheiten, mit denen die Inhalte der virtuellen Speicher überwacht und aktualisiert und abgeglichen werden.

Gemäß einer besonders vorteilhaften Ausgestaltung der Erfindung ist ein Host-System vorgesehen, mittels dessen Zugriffe auf virtuelle Speicher und Speicher des oder der RFID-Datenträger steuerbar und/oder durchführbar sind.

Vorteilhaft steuert das Host-System Schreib- oder Lesevorgänge der oder jeder RFID-Schreib-/Leseeinheit.

Das Host-System ist dabei zweckmäßig ein Steuerungssystem, das Bestandteil eines Identifikations-, Produktions-, oder Logistiksystems ist, für welches das RFID-System eingesetzt wird.

Eine erste wesentliche Funktion des Host-Systems besteht darin, dass mit diesem selbst Schreib- bzw. Lesevorgänge von virtuellen Speichern des RFID-Systems durchgeführt werden. Da die virtuellen Speicher ein komplettes virtuelles Abbild der Speicherinhalte der jeweils zugeordneten RFID-Datenträger enthalten, können die Schreib-/Lesevorgänge des Host-Systems die mit der RFID-Schreib-/Leseeinheit durchgeführten Schreib-/Lesevorgänge der RFID-Schreib-/Leseeinheit vollständig ersetzen. Damit werden bei dem erfindungsgemäßen RFID-System Schreib-/Lesevorgänge aus der physikalischen Ebene der RFID-Schreib-/Leseeinheiten in eine höhere Rechnerebene verlagert, wo die Schreib-/Lesevorgänge schneller durchgeführt werden können. Dabei besteht ein wesentlicher Aspekt darin, dass das Host-System jederzeit auf die Daten der virtuellen Speicher zugreifen kann, ohne dass hierzu der jeweilige RFID-Datenträger von einer RFID-Schreib-/Leseeinheit erfasst werden muss.

Mit dem Host-System können direkt Inhalte virtueller Speicher bearbeitet werden, insbesondere durch die Schreib-/Lesevorgänge. Weiterhin kann das Host-System mit Anforderungsbefehlen die Rechnereinheit steuern. Mit einem solchen Anforderungsbefehl kann das Host-System den Zugriff auf die virtuellen Speicher durch die Rechnereinheit freigeben. Weiterhin kann dabei das Host-System die Benutzerschnittstelle freigeben, so dass über diese Daten der virtuellen Speicher bearbeitet werden können.

Eine weitere wesentliche Funktion des Host-Systems besteht darin, die RFID-Schreib-/Leseeinheiten zu steuern, insbesondere zur Durchführung von Schreib- /Lesevorgängen. Das Host-System sendet hierzu an die jeweilige RFID-Schreib-/Leseeinheit einen Lese- oder Schreibbefehl, so dass dann die RFID-Schreib-/Leseeinheit für einen in deren Lesebereich vorhandenen RFID-Datenträgern Daten ausliest oder in diesen einschreibt.

Der Lese- oder Schreibbefehl wird beispielsweise durch ein Programm einer Steuerung, die einen Prozess, wie z.B. einen Logistikprozess oder Produktionsprozess der mit dem RFID-System überwacht wird, initiiert. Alternativ kann der Lese- oder Schreibbefehl durch einen externen Sensor, der mit der jeweiligen RFID-Schreib-/Leseeinheit oder mit dem Host-System verbunden ist, erfolgen. Der Sensor generiert dabei ein Triggersignal, das einen Lese- oder Schreibbefehl auslöst.

Abhängig von den mit dem RFID-System überwachten Prozessen kann es zweckmäßig sein, dass RFID-Schreib-/Leseeinheiten in einen kontinuierlichen, dauerhaften Lesemodus versetzt sind, d.h. die jeweilige RFID-Schreib-/Leseeinheit ist ständig aktiv und erfasst jeden RFID-Datenträger, der in den Lesebereich dieser RFID-Schreib-/Leseeinheit kommt. Die Daten jedes in den Lesebereich kommenden RFID-Datenträgers werden dann von der RFID-Schreib-/Leseeinheit gelesen und werden dann an das Host-System und die Rechnereinheit weitergegeben.

Vorteilhaft werden zur Bearbeitung Inhalte virtueller Speicher dieselben Befehlssätze wie zur Bearbeitung der Inhalte von Speichern von RFID-Datenträgern verwendet.

Dadurch ist eine vollständige Kompatibilität bei der Bearbeitung der virtuellen Speicher der Rechnereinheit und der physikalischen Speicher der RFID-Datenträger gegeben.

Die Erfindung wird im Folgenden anhand der Zeichnung erläutert. Es zeigt:

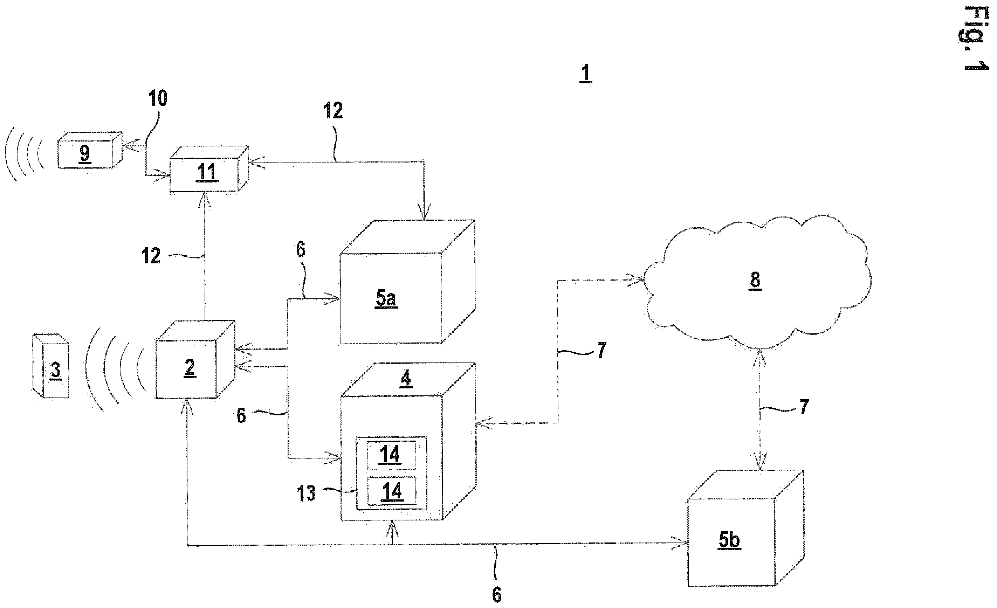

- Figur 1:: Blockschaltbild des erfindungsgemäßen RFID-Systems.

Figur 1 zeigt stark schematisiert ein Ausführungsbeispiel des erfindungsgemäßen RFID-Systems 1.

Das RFID-System 1 umfasst eine Anzahl von RFID-Schreib-/Leseeinheiten 2 die als eigenständige Geräte der als Komponenten größerer Einheiten ausgebildet sein können. Der Einfachheit halber ist in Figur 1 nur eine RFID-Schreib-/Leseeinheit 2 dargestellt, wobei typischerweise das RFID-System 1 eine größere Anzahl von RFID-Schreib-/Leseeinheiten 2 aufweist.

Mit einer RFID-Schreib-/Leseeinheit 2 können Daten aus einem RFID-Datenträger 3 ausgelesen oder in diesen eingeschrieben werden, wenn sich dieser RFID-Datenträger 3, der als RFID-Tag bzw. als Transponder ausgebildet ist, innerhalb des Lesebereichs der RFID-Schreib-/Leseeinheit 2 befindet, wie in Figur 1 dargestellt.

In Figur 1 ist nur ein RFID-Datenträger 3 beispielhaft dargestellt. Das RFID-System 1 umfasst typischerweise eine Vielzahl von RFID-Datenträgern 3, die insbesondere zur Identifikation von Objekten dienen. Hierzu sind die RFID-Datenträger 3 an oder in den Objekten angebracht. Die RFID-Datenträger 3 weisen Speicher auf, in welchen Daten gespeichert sind, die insbesondere die Objekte kennzeichnen.

Das erfindungsgemäße RFID-System 1 umfasst weiterhin ein Steuerungssystem, mit dem erfindungsgemäß Schreib-/Lesevorgänge aus der physikalischen Ebene der RFID-Schreib-/Leseeinheit 2 in eine höhere IT-Ebene verlagert werden, wodurch schnellere Schreib-/Lesevorgänge ermöglicht werden und zudem die physikalischen Speicherbereiche der RFID-Schreib-/Leseeinheit 2 durch virtuelle Speicher 14 im Steuerungssystem erweitert werden.

Dieses Steuerungssystem umfasst eine Rechnereinheit und ein Host-System als wesentliche Komponenten. Die Rechnereinheit ist im vorliegenden Fall von einem Edge-Computer 4 gebildet. Alternativ kann die Rechnereinheit beispielsweise ein Server, eine Cloud-Anwendung oder ein lokaler Industrie-PC einer Automatisierungsanlage sein. Das Host-System wird typischerweise von einem der Prozessebene übergeordnetem IT-System gebildet und kann beispielsweise eine Maschinen- oder Anlagensteuerung (SPS), ein Netzwerk-Server, ein SCADA-, ein MES- oder ein ERP-System sein.

Im vorliegenden Fall umfasst das Host-System beispielhaft zwei Host-Instanzen 5a, 5b. Eine erste Host-Instanz 5a ist über einen Datenkanal 6 mit der RFID-Schreib-/Leseeinheit 2 verbunden. Eine zweite Host-Instanz 5b ist über einen weiteren Datenkanal 6 mit dem Edge-Computer 4 und der RFID-Schreib-/Leseeinheit 2 verbunden. Die zweite Host-Instanz 5b ist über eine Datenverbindung 7, insbesondere eine Internet-Verbindung, mit einer Cloud-Applikation 8 verbunden.

Das Steuerungssystem gemäß Figur 1 bildet ein Netzwerk. Dementsprechend sind der Edge-Computer 4 und die Host-Instanzen 5a, 5b netzwerkfähige Systemkomponenten.

Gemäß einer ersten Variante sind leitungsgebundene Datenkanäle 6 als Bestandteil eines Ethernet-basierten Netzwerks vorgesehen.

Insbesondere kann der Datenkanal 6 zwischen RFID-Schreib-/Leseeinheit 2 und der Host-Instanz 5a im Falle einer Maschinen- oder Anlagensteuerung (SPS) über einen echtzeitfähigen Ethernet-basierten Industrie-Feldbus realisiert werden.

Alternativ sind berührungslos arbeitende Datenkanäle 6 vorgesehen, über welche eine funkbasierte Datenübertragung erfolgt.

Im vorliegenden Fall erfolgt über die Datenkanäle 6 eine Datenkommunikation mit standardisierten internetfähigen Kommunikationsprotokollen.

Vorteilhaft bilden die Datenkanäle 6 sichere Kommunikations-Schnittstellen mit verschlüsselten Verbindungen aus.

Auch der Edge-Computer 4 kann über eine internetfähige Datenverbindung 7 mit der Cloud-Applikation 8 verbunden werden.

Ein externer Sensor 9 ist über eine Zuleitung 10 oder dergleichen an einen Sensor-Hub 11 angeschlossen. Der Sensor-Hub 11 ist eine Microcontroller-gesteuerte Einheit, die für die Anbindung des Sensors 9 an das Steuerungssystem sorgt. Im vorliegenden Fall ist der Sensor-Hub 11 über Datenleitungen 12 mit der Host-Instanz 5a und einer RFID-Schreib-/Leseeinheit 2 verbunden. Mehrere Sensoren 9 können einer RFID-Schreib-/Leseeinheit 2 zugeordnet sein. Auch kann ein Sensor 9 mehreren RFID-Schreib-/Leseeinheiten 2 zugeordnet sein.

Erfindungsgemäß ist in dem Edge-Computer 4 eine Datenbank 13 vorhanden.

Vorteilhaft ist die Datenbank 13 segmentierbar und/oder skalierbar.

Weiter vorteilhaft ist die Datenbank 13 zugriffsgeschützt.

Zweckmäßig ist die Datenbank 13 durch einen Lock-Mechanismus oder durch Benutzerauthentifizierung mittels Passwort-Eingaben zugriffsgeschützt.

Weiter vorteilhaft können für die Datenbank 13 unterschiedliche Zugriffsrechte vergeben werden.

Erfindungsgemäß sind in der Datenbank 13 virtuelle Speicher 14 vorhanden. Jedem RFID-Datenträger 3 ist genau ein virtueller Speicher 14 zugeordnet. In jedem virtuellen Speicher 14 ist das virtuelle Abbild der Inhalt des zugeordneten RFID-Datenträgers 3 hinterlegt.

Weiterhin weist der virtuelle Speicher 14 für den oder einen RFID-Datenträger 3 einen erweiterten Speicherbereich auf, in welchen erweiterte Daten abgespeichert sind, die im Speicher des jeweiligen RFID-Datenträgers 3 nicht vorhanden sind.

Beispielsweise sind die erweiterten Daten von Sensormessungen, Informationen über einen Gerätestatus, Prozessinformationen und/oder Metadaten gebildet.

Das RFID-System 1 gemäß Figur 1 kann dahingehend erweitert sein, dass mehrere Rechnereinheiten mit Datenbanken 13 vorhanden sind, wobei die Rechnereinheiten über Netzwerk-Router oder eine Cloud-Applikation 8 verbunden sind.

In diesem Fall sind Mittel zur Synchronisierung der Datenbanken 13 und/oder der in den Datenbanken 13 vorhandenen virtuellen Speichern 14 vorhanden.

Mit dem Host-System, d.h. den Host-Instanzen 5a, 5b wird der Zugriff auf die Inhalte der virtuellen Speicher 14 gesteuert.

Insbesondere können mit dem Host-System Inhalte der virtuellen Speicher 14 geändert werden. Dabei ist vorteilhaft, dass in der Datenbank 13 die Speicherbereiche der virtuellen Speicher 14 an den Umfang der dort gespeicherten Daten dynamisch angepasst werden können. Der Zugriff des Host-Systems auf die virtuellen Speicher 14 kann unabhängig von mit den RFID-Schreib-/Leseeinheiten 2 durchgeführten Lesevorgängen erfolgen.

Vorteilhaft werden zur Bearbeitung der Inhalte virtueller Speicher 14 dieselben Befehlssätze wie zur Bearbeitung der Inhalte der physikalischen Speicher von RFID-Datenträgern 3 verwendet.

Weiterhin kann mit dem Host-System eine Benutzerschnittstelle gesteuert werden, so dass bei einer Freigabe durch das Host-System ein Benutzer Daten in den virtuellen Speichern ändern kann.

Weiterhin werden mit dem Host-System Schreib-/Lesevorgänge der RFID-Schreib-/Leseeinheiten 2 gesteuert.

Abhängig von Triggersignalen, die in einem Programm einer Steuerung der mit dem RFID-System 1 überwachten Anlage oder in dem oder einem Sensor 9 generiert werden, wird im Host-System ein Lese- oder Schreibbefehl generiert, der an eine RFID-Schreib-/Leseeinheit 2 ausgegeben wird, worauf er diese Daten aus einem RFID-Datenträger 3 ausliest oder in diesen einschreibt, wenn sich dieser RFID-Datenträger 3 im Lesebereich der RFID-Schreib-/Leseeinheit 2 befindet.

Alternativ können RFID-Schreib-/Leseeinheiten 2 dauerhaft in einen kontinuierlichen Lesemodus versetzt sein. Die jeweilige RFID-Schreib-/Leseeinheit 2 ist dann ständig aktiv und liest Daten aus einem RFID-Datenträger 3, sobald sich dieser im Lesebereich der RFID-Schreib-/Leseeinheit 2 befindet. Ebenso können Daten in den RFID-Datenträger 3 eingeschrieben werden.

### Bezugszeichenliste

- (1): RFID-System
- (2): RFID-Schreib-/Leseeinheit
- (3): RFID-Datenträger
- (4): Edge-Computer
- (5a): Host-Instanz
- (5b): Host-Instanz
- (6): Datenkanal
- (7): Datenverbindung
- (8): Cloud-Applikation
- (9): Sensor
- (10): Zuleitung
- (11): Sensor-Hub
- (12): Datenleitung
- (13): Datenbank
- (14): virtueller Speicher

## Patentansprüche

1. RFID-System (1) mit wenigstens einer RFID-Schreib-/Leseeinheit (2) und wenigstens einem RFID-Datenträger (3), wobei die wenigstens eine RFID-Schreib-/Leseeinheit (2) ausgebildet ist, Daten aus einem Speicher des wenigstens einen RFID-Datenträgers (3) auszulesen oder in diesen einzuschreiben,
**dadurch gekennzeichnet, dass** die wenigstens eine RFID-Schreib-/Leseeinheit (2) über einen Datenkanal (6) mit einer Datenbank (13) einer Rechnereinheit verbunden ist, wobei der Datenkanal (6), die Datenbank (13) und die Rechnereinheit Bestandteile des RFID-Systems (1) sind, wobei in der Datenbank (13) wenigstens ein virtueller Speicher (14) vorhanden ist, welcher ein virtuelles Abbild des Inhalts des Speichers des wenigstens einen RFID-Datenträgers (3) enthält, und dass der Speicherbereich des oder jedes virtuellen Speichers dynamisch veränderbar ist.

2. RFID-System (1) nach Anspruch 1, **dadurch gekennzeichnet, dass** der virtuelle Speicher (14) für den oder einen RFID-Datenträger (3) einen erweiterten Speicherbereich aufweist, in welchem erweiterte Daten abgespeichert sind, die im Speicher des RFID-Datenträgers (3) nicht vorhanden sind.

3. RFID-System (1) nach Anspruch 2, **dadurch gekennzeichnet, dass** die erweiterten Daten von Sensormessungen, Informationen über einen Gerätestatus, Prozessinformationen und/oder Metadaten gebildet sind.

4. RFID-System (1) nach einem der Ansprüche 1 bis 3, **dadurch gekennzeichnet, dass** die Datenbank (13) segmentierbar und/oder skalierbar ist.

5. RFID-System (1) nach einem der Ansprüche 1 bis 4, **dadurch gekennzeichnet, dass** die Datenbank (13) über eine Benutzerauthentifizierung zugriffsgeschützt ist.

6. RFID-System (1) nach Anspruch 5, **dadurch gekennzeichnet, dass** die Datenbank (13) durch einen Lock-Mechanismus oder durch Passwort-Eingaben zugriffsgeschützt ist.

7. RFID-System (1) nach einem der Ansprüche 1 bis 6, **dadurch gekennzeichnet, dass** für die Datenbank (13) unterschiedliche Zugriffsrechte vergeben werden können.

8. RFID-System (1) nach einem der Ansprüche 1 bis 7, **dadurch gekennzeichnet, dass** leitungsgebundene Datenkanäle (6) als Bestandteil eines Ethernet-basierten Netzwerks vorgesehen sind.

9. RFID-System (1) nach Anspruch 8, **dadurch gekennzeichnet, dass** zumindest einige Datenkanäle (6) Bestandteil eines echtzeitfähigen Feldbus-Systems sind.

10. RFID-System (1) nach einem der Ansprüche 1 bis 7, **dadurch gekennzeichnet, dass** berührungslos arbeitende Datenkanäle (6) vorgesehen sind, über welche eine funkbasierte Datenübertragung erfolgt.

11. RFID-System (1) nach einem der Ansprüche 1 bis 10, **dadurch gekennzeichnet, dass** über die Datenkanäle (6) eine Datenkommunikation mit internetfähigen standardisierten Kommunikationsprotokollen erfolgt.

12. RFID-System (1) nach einem der Ansprüche 1 bis 3, **dadurch gekennzeichnet, dass** die Datenkanäle (6) sichere Kommunikations-Schnittstellen mit verschlüsselter Datenübertragung ausbilden.

13. RFID-System (1) nach einem der Ansprüche 1 bis 12, **dadurch gekennzeichnet, dass** die Rechnereinheit netzwerkfähig ist.

14. RFID-System (1) nach einem der Ansprüche 1 bis 13, **dadurch gekennzeichnet, dass** die Rechnereinheit ein Server, ein Edge-Computer (4), eine Cloud-Applikation (8) oder ein lokaler Industrie-PC einer Automatisierungsanlage ist.

15. RFID-System (1) nach einem der Ansprüche 1 bis 14, **dadurch gekennzeichnet, dass** mehrere Rechnereinheiten mit Datenbanken (13) vorhanden sind, wobei die Rechnereinheiten über Netzwerk-Router oder eine Cloud-Applikation (8) verbunden sind.

16. RFID-System (1) nach Anspruch 15, **dadurch gekennzeichnet, dass** Mittel zur Synchronisierung der Datenbanken (13) und/oder der in den Datenbanken (13) vorhandenen virtuellen Speichern (14) vorhanden sind.

17. RFID-System (1) nach einem der Ansprüche 1 bis 6, **dadurch gekennzeichnet, dass** die oder jede Rechnereinheit eine Benutzerschnittstelle aufweist, über welche ein Zugriff auf die Datenbank (13) und deren virtuelle Speicher (14) ermöglicht ist.

18. RFID-System (1) nach Anspruch 17, **dadurch gekennzeichnet, dass** die Benutzerschnittstelle in einem Cloud-System vorgesehen ist.

19. RFID-System (1) nach einem der Ansprüche 1 bis 18, **dadurch gekennzeichnet, dass** ein Host-System vorgesehen ist, mittels dessen Zugriffe auf virtuelle Speicher (14) und Speicher des oder der RFID-Datenträger (3) steuerbar und/oder durchführbar sind.

20. RFID-System (1) nach Anspruch 19, **dadurch gekennzeichnet, dass** das Host-System Schreib- oder Lesevorgänge der oder jeder RFID-Schreib-/Leseeinheit (2) steuert.

21. RFID-System (1) nach Anspruch 19, **dadurch gekennzeichnet, dass** ein oder mehrere oder alle RFID-Schreib/Leseeinheiten (2) dauerhaft in einen Lesemodus versetzt sind, und dass mit der jeweiligen RFID-Schreib/Leseeinheit (2) erfasste Daten an das Host-System und die Rechnereinheit übermittelt werden.

22. RFID-System (1) nach Anspruch 21, **dadurch gekennzeichnet, dass** mit dem Host-System ein direkter Zugriff auf virtuelle Speicher (14) der Datenbank (13) ohne Durchführung eines Lesevorgangs mit einer RFID-Schreib-/Leseeinheit (2) erfolgen kann.

23. RFID-System (1) nach einem der Ansprüche 19 bis 22, **dadurch gekennzeichnet, dass** das Host-System eine Maschinen- und Anlagensteuerung (SPS), ein Netzwerk-Server, ein SCADA-, ein MES- oder ein ERP-System ist.

24. RFID-System (1) nach einem der Ansprüche 19 bis 23, **dadurch gekennzeichnet, dass** mittels des Host-Systems Inhalte virtueller Speicher (14) bearbeitbar sind.

25. RFID-System (1) nach Anspruch 24, **dadurch gekennzeichnet, dass** zur Bearbeitung Inhalte virtueller Speicher (14) dieselben Kommunikationsprotokolle wie zu Bearbeitung der Inhalte von Speichern von RFID-Datenträgern (3) verwendet werden.

## Claims

1. RFID system (1) with at least one RFID read/write unit (2) and at least one RFID data carrier (3), wherein said at least one RFID read/write unit (2) is designed to read data from a memory of said at least one RFID data carrier (3) or to write data to it.
**characterised in that** said at least one RFID read/write unit (2) is connected to a database (13) of a computer unit via a data channel (6), wherein the data channel (6), the database (13) and the computer unit are components of the RFID system (1), wherein at least one virtual memory (14) is present in the database (13), which contains a virtual image of the content of the memory of said at least one RFID data carrier (3), and **in that** the memory area of the or each virtual memory can be changed dynamically.

2. RFID system (1) according to claim 1, **characterised in that** the virtual memory (14) for the or an RFID data carrier (3) has an extended memory area in which extended data is stored which is not present in the memory of the RFID data carrier (3).

3. RFID system (1) according to claim 2, **characterised in that** the extended data is formed by sensor measurements, information about a device status, process information and/or metadata.

4. RFID system (1) according to one of claims 1 to 3, **characterised in that** the database (13) is segmentable and/or scalable.

5. RFID system (1) according to one of claims 1 to 4, **characterised in that** the database (13) is access-protected via user authentication.

6. RFID system (1) according to claim 5, **characterised in that** the database (13) is access-protected by a lock mechanism or by password entries.

7. RFID system (1) according to one of claims 1 to 6, **characterised in that** different access rights can be assigned for the database (13).

8. RFID system (1) according to one of claims 1 to 7, **characterised in that** wired data channels (6) are provided as part of an Ethernet-based network.

9. RFID system (1) according to claim 8, **characterised in that** at least some data channels (6) are part of a real-time capable field bus system.

10. RFID system (1) according to one of claims 1 to 7, **characterised in that** contactless data channels (6) are provided, via which radio-based data transmission takes place.

11. RFID system (1) according to one of claims 1 to 10, **characterised in that** data communication with internet-capable standardised communication protocols takes place via the data channels (6).

12. RFID system (1) according to one of claims 1 to 3, **characterised in that** the data channels (6) form secure communication interfaces with encrypted data transmission.

13. RFID system (1) according to one of claims 1 to 12, **characterised in that** the computer unit is network-compatible.

14. RFID system (1) according to one of claims 1 to 13, **characterised in that** the computer unit is a server, an edge computer (4), a cloud application (8) or a local industrial PC of an automation system.

15. RFID system (1) according to one of claims 1 to 14, **characterised in that** a plurality of computer units with databases (13) are present, the computer units being connected via network routers or a cloud application (8).

16. RFID system (1) according to claim 15, **characterised in that** means are provided for synchronising the databases (13) and/or the virtual memories (14) present in the databases (13).

17. RFID system (1) according to one of claims 1 to 6, **characterised in that** the or each computer unit has a user interface via which access to the database (13) and its virtual memory (14) is made possible.

18. RFID system (1) according to claim 17, **characterised in that** the user interface is provided in a cloud system.

19. RFID system (1) according to one of claims 1 to 18, **characterised in that** a host system is provided, by means of which accesses to virtual memories (14) and memories of the RFID data carrier(s) (3) can be controlled and/or carried out.

20. RFID system (1) according to claim 19, **characterised in that** the host system controls write or read operations of the or each RFID read/write unit (2).

21. RFID system (1) according to claim 19, **characterised in that** one or more or all RFID read/write units (2) are permanently set to a read mode, and **in that** data recorded with the respective RFID read/write unit (2) is transmitted to the host system and the computer unit.

22. RFID system (1) according to claim 21, **characterised in that** the host system can be used to directly access virtual memories (14) of the database (13) without performing a read operation with an RFID read/write unit (2).

23. RFID system (1) according to one of claims 19 to 22, **characterised in that** the host system is a machine and plant control system (PLC), a network server, a SCADA system, an MES system or an ERP system.

24. RFID system (1) according to one of claims 19 to 23, **characterised in that** contents of virtual memories (14) can be processed by means of the host system.

25. RFID system (1) according to claim 24, **characterised in that** the same communication protocols are used for processing the contents of virtual memories (14) as for processing the contents of memories of RFID data carriers (3).

## Revendications

1. Système RFID (1) comprenant au moins une unité de lecture/écriture RFID (2) et au moins un support de données RFID (3), dans lequel au moins une unité de lecture/écriture RFID (2) est conçue pour lire des données dans une mémoire du au moins un support de données RFID (3) ou pour y écrire des données.
**caractérisé par le fait que** ladite au moins une unité de lecture/écriture RFID (2) est connectée à une base de données (13) d'une unité informatique via un canal de données (6), le canal de données (6), la base de données (13) et l'unité informatique étant des composants du système RFID (1), au moins une mémoire virtuelle (14) étant présente dans la base de données (13) et contenant une image virtuelle du contenu de la mémoire dudit au moins un support de données RFID (3), et **par le fait que** la zone de mémoire de ladite ou de chaque mémoire virtuelle peut être modifiée de manière dynamique.

2. Système RFID (1) selon la revendication 1, **caractérisé par le fait que** la mémoire virtuelle (14) pour ledit ou un support de données RFID (3) comporte une zone de mémoire étendue dans laquelle sont stockées des données étendues qui ne sont pas présentes dans la mémoire du support de données RFID (3).

3. Système RFID (1) selon la revendication 2, **caractérisé par le fait que** les données étendues sont constituées de mesures de capteurs, d'informations sur l'état d'un dispositif, d'informations sur le processus et/ou de métadonnées.

4. Système RFID (1) selon l'une des revendications 1 à 3, **caractérisé par le fait que** la base de données (13) est segmentable et/ou évolutive.

5. Système RFID (1) selon l'une des revendications 1 à 4, **caractérisé par le fait que** l'accès à la base de données (13) est protégé par l'authentification de l'utilisateur.

6. Système RFID (1) selon la revendication 5, **caractérisé par le fait que** l'accès à la base de données (13) est protégé par un mécanisme de verrouillage ou par des saisies de mot de passe.

7. Système RFID (1) selon l'une des revendications 1 à 6, **caractérisé par le fait que** différents droits d'accès peuvent être attribués à la base de données (13).

8. Système RFID (1) selon l'une des revendications 1 à 7, **caractérisé par le fait que** les canaux de données câblés (6) sont fournis dans le cadre d'un réseau Ethernet.

9. Système RFID (1) selon la revendication 8, **caractérisé par le fait qu'**au moins certains canaux de données (6) font partie d'un système de bus de terrain capable de fonctionner en temps réel.

10. Système RFID (1) selon l'une des revendications 1 à 7, **caractérisé par** la présence de canaux de données sans contact (6) permettant la transmission de données par radio.

11. Système RFID (1) selon l'une des revendications 1 à 10, **caractérisé par le fait que** la communication de données comprenant des protocoles de communication normalisés compatibles avec l'internet s'effectue par l'intermédiaire des canaux de données (6).

12. Système RFID (1) selon l'une des revendications 1 à 3, **caractérisé par le fait que** les canaux de données (6) constituent des interfaces de communication sécurisées avec transmission de données cryptées.

13. Système RFID (1) selon l'une des revendications 1 à 12, **caractérisé par le fait que** l'unité informatique est compatible avec un réseau.

14. Système RFID (1) selon l'une des revendications 1 à 13, **caractérisé par le fait que** l'unité informatique est un serveur, un ordinateur périphérique (4), une application en nuage (8) ou un PC industriel local d'un système d'automatisation.

15. Système RFID (1) selon l'une des revendications 1 à 14, **caractérisé par** la présence de plusieurs unités informatiques avec des bases de données (13), les unités informatiques étant connectées via des routeurs de réseau ou une application en nuage (8).

16. Système RFID (1) selon la revendication 15, **caractérisé en ce que** des moyens sont prévus pour synchroniser les bases de données (13) et/ou les mémoires virtuelles (14) présentes dans les bases de données (13).

17. Système RFID (1) selon l'une des revendications 1 à 6, **caractérisé par le fait que** l'unité informatique ou chaque unité informatique possède une interface utilisateur permettant d'accéder à la base de données (13) et à sa mémoire virtuelle (14).

18. Système RFID (1) selon la revendication 17, **caractérisé par le fait que** l'interface utilisateur est fournie dans un système en nuage.

19. Système RFID (1) selon l'une des revendications 1 à 18, **caractérisé en ce qu'**un système hôte est fourni, au moyen duquel les accès aux mémoires virtuelles (14) et aux mémoires dudit ou des supports de données RFID (3) peuvent être commandés et/ou mis en oeuvre.

20. Système RFID (1) selon la revendication 19, **caractérisé par le fait que** le système hôte commande les opérations d'écriture ou de lecture de ladite ou de chaque unité de lecture/écriture RFID (2).

21. Système RFID (1) selon la revendication 19, **caractérisé par le fait qu'**une ou plusieurs ou toutes les unités de lecture/écriture RFID (2) sont réglées en permanence sur un mode de lecture, et que les données enregistrées avec l'unité de lecture/écriture RFID respective (2) sont transmises au système hôte et à l'unité informatique.

22. Système RFID (1) selon la revendication 21, **caractérisé par le fait que** le système hôte peut être utilisé pour accéder directement aux mémoires virtuelles (14) de la base de données (13) sans effectuer d'opération de lecture avec une unité de lecture/écriture RFID (2).

23. Système RFID (1) selon l'une des revendications 19 à 22, **caractérisé par le fait que** le système hôte est un système de commande de machine et d'usine (PLC), un serveur de réseau, un système SCADA, un système MES ou un système ERP.

24. Système RFID (1) selon l'une des revendications 19 à 23, **caractérisé par le fait que** le contenu des mémoires virtuelles (14) peut être traité au moyen du système hôte.

25. Système RFID (1) selon la revendication 24, **caractérisé en ce que** les mêmes protocoles de communication sont utilisés pour traiter le contenu des mémoires virtuelles (14) que pour traiter le contenu des mémoires des supports de données RFID (3).
